# EUROPÄISCHE PATENTANMELDUNG

(11) **EP 1 338 585 A1**
(43) Veröffentlichungstag der Anmeldung: **27.08.2003**
(21) Anmeldenummer: 03002349.3
(22) Anmeldetag: 04.02.2003
(51) Int. Cl.: C05F 11/10

(54) **Neue Dünge- und Pflanzenhilfsmittel für den Pflanzenbau, insbesondere für den Obstanbau**

(30) Priorität: 05.02.2002 DE 10204456
(71) Anmelder: Globachem nv, 3803 Sint-Truiden (BE)
(72) Erfinder: Quaghebeur, Koen, 3803 Sint-Truiden (BE)
(74) Vertreter: Flaccus, Rolf-Dieter, Dr.

(57) **Zusammenfassung**

Die Erfindung betrifft Gibberelline, 1-Naphthalinessigsäure (NAA) und/oder 1-Naphthylacetamid (NAD) enthaltende Formulierungen, deren Verwendung als Dünge- und/oder Pflanzenhilfsmittel sowie ein Verfahren zur Düngung höherer Pflanzen und/oder zur Anwendung als Pflanzerihilfsstoff für höhere Pflanzen, das dadurch gekennzeichnet ist, daß man auf deren oberirdischen Teile eine phytoeffektiv wirksame Menge mindestens eine dieser Verbindungen aufbringt.

## Beschreibung

Die vorliegende Erfindung betrifft Gibberelline, 1-Naphthalinessigsäure (NAA) und/oder 1-Naphthylacetamid (NAD) enthaltende Formulierungen, deren Verwendung als Dünge- und/oder Pflanzenhilfsmittel sowie ein Verfahren zur Düngung höherer Pflanzen und/oder zur Anwendung als Pflanzenhilfsstoff für höhere Pflanzen.

Laut Römpp's Chemie Lexikon (9. Ausgabe, 1995), sind Düngemittel Stoffe, die dazu bestimmt sind, "mittelbar oder unmittelbar Nutzpflanzen zugeführt zu werden, um ihr Wachstum zu fördern oder ihren Ertrag zu erhöhen oder ihre Qualität zu verbessern".

Düngemittel werden unterteilt in Wirtschaftsdünger, die im Bereich des Bauernhofes gewonnen werden, wie zum Beispiel tierische Ausscheidungen, Gülle, Jauche u.a. und Handelsdünger. Der große Nachteil der Wirtschaftsdünger ist die mit der Ausbringung verbundene starke Geruchsbelästigung und die Gefahr der Eutrophierung.

Zu der Gruppe der Handelsdünger zählen Produkte, die industriell hergestellt oder durch Bergbau gewonnen werden und die umgangssprachlich auch als Kunstdünger bezeichnet werden. Dazu gehören Kali-, Stickstoff-, Phosphat-, Magnesium- oder auch Volldünger. Der wesentliche Nachteil dieser Düngemittel liegt auch bei diesen in der Gefahr der Eutrophierung.

Pflanzenhilfsmittel sind gemäß Düngemittelgesetz vom 15. November 1977, geändert durch das Gesetz vom 27. September 1994 (BGBI. IS 2705, 2725), definiert als "Stoffe ohne wesentlichen Nährstoffgehalt, die dazu bestimmt sind, auf die Pflanzen einwirken". Unter der Bezeichnung "Pflanzenhilfsmittel" und "Pflanzenhilfsstoffe" werden in der vorliegenden Anmeldung im weitesten Sinn auch Zusatzstoffe verstanden.

Die Gibberelline sind eine Gruppe von Pflanzenwuchsstoffen (Phytohormone). Seit 1938 in Japan erstmals ein Gibberellin aus dem Kulturfiltrat des japanischen Pilzes Gibberella fujikuroi isoliert wurde, sind heute über 70 verschiedene Gibberelline bekannt geworden. Ihre Struktur geht auf ent-Gibberellan (C20) zurück, ein tetracyclisches Diterpenoid.

Die Anwendung von Gibberellinen bei Pflanzen nach der Blüte war schon als qualitätssteigernde Maßnahme bekannt.

Die Anwendung der natürlich vorkommenden Auxine 1-Naphthalinessigsäure (NAA) und 1-Naphtylacetamid (NAD) 7 bis 10 Tage nach der Blüte zur Ausdünnung der Blüten war ebenso schon bekannt.

Es hat sich nun überraschenderweise gezeigt, dass beim Einsatz von natürlichen Gibberellinen wie zum Beispiel Gibberellin A₄ und A₇ (Stereoisomere) aber auch von Gibberellin A₃ (Gibberellin-Säure (GA₃)) pflanzenphysologisch sowohl die Effekte von Düngemitteln als auch von Pflanzenhilfsmitteln und Pflanzenstärkungsmitteln beobachtet werden ohne die nachteiligen Eigenschaften von Düngemitteln.

Die Blattanwendung, also die Applikation auf bzw. die Anwendung über die Blattoberflächen, hat einen positiven Effekt auf den Ertrag und/oder die Qualität der Erzeugnisse. So wird bei der Anwendung einer Mischung von GA₄/GA₇ in Apfelkulturen vor der Blüte eine nicht zu erwartende Ertragsteigerung um 24 % im Vergleich zu einer unbehandelten Kontrolle festgestellt. Die Anwendung vor der Blüte ist eine neue Anwendungsform der erfindungsgemäßen Dünge- oder Pflanzenhilfsmittel.

Bei einer Anwendung von NAA und NAD, insbesondere NAD, im Apfelanbau während der Blüte wird der Ertrag überraschenderweise um 20 % im Vergleich zu einer unbehandelten Kontrolle gesteigert. Diese Anwendung von NAA bzw. NAD ggf. in Kombination mit den vorerwähnten Gibberellinen ist neu und aus dem Stand der Technik nicht herleitbar.

Vergleichbare Ertragssteigerungen werden auch bei der Anwendung in Birnenkulturen beobachtet. Hier ist der späte Frost während der Blüte der Kultur ein häufiges Problem, das durch die Anwendung der erfindungsgemäßen Dünge- bzw. Pflanzenhilfsmittel gelöst werden kann. Es sind aber auch Anwendungen in fast allen Kulturen des Acker- bzw. Pflanzenbaus z.B. Trauben, Erbsen ebenso Getreide, um nur einige zu nennen, möglich.

Die Erfindung betrifft daher die Verwendung einer Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), oder einer Mischung von mindestens zwei aus dieser Reihe ausgewählten Verbindungen als Düngeund/oder Pflanzenhilfsmittel.

Vorzugsweise wird eine Mischung aus GA₄ und GA₇, GA₃, NAD oder NAA verwendet. Die Anwendung kann im Pflanzen- bzw. Ackerbau, insbesondere im Obst- oder Weinbau, erfolgen. Bevorzugt ist auch die Verwendung zur Ertragssteigerung in Kulturen vor oder insbesondere während der Blüte.

Die Erfindung betrifft weiterhin ein Verfahren zur Düngung höherer Pflanzen und/oder zur Anwendung als Pflanzenhilfsstoff für höhere Pflanzen, das dadurch gekennzeichnet ist, dass man auf deren oberirdischen Teile eine phytoeffektiv wirksame Menge mindestens einer Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), in Form einer geeigneten Formulierung aufbringt.

Die Erfindung betrifft schließlich Formulierungen, enthaltend mindestens eine Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), zusammen mit geeigneten Träger-, Zusatz- und/oder Hilfsstoffen zur Anwendung als Dünge- und/oder Pflanzenhilfsmittel, wobei diese nach Verdünnung auf eine zur Aufbringung geeignete Konzentration erfolgt.

Die erwähnten Wirkstoffe können sowohl als Tankmischungen eingesetzt werden, wobei jeder Wirkstoff einzeln formuliert ist und erst zum Zeitpunkt der Anwendung mit anderen formulierten Wirkstoffen im Spritztank des Sprühgerätes gemischt wird, oder sie können schon gemeinsam formuliert werden und zwar auf verschiedene Art, je nachdem, welche biologischen und/oder chemischphysikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Granulate (GR) in Form von Mikro-, Sprüh-, Aufzugs- und Adsorptionsgranulaten, wasserlösliche Granulate (SG), wasserdispergierbare Granulate (WG), Mikrokapseln und wirkstoffhaltige Tabletten.

Diese einzelnen Formulierungstypen sind im Prinzip bekannt und werden beispielsweise beschrieben in: Winnacker-Küchler, "Chemische Technologie" Band 7, C. Hauser Verlag München, 4. Auflage 1986; Wade van Valkenburg, "Pesticide Formulations", Marcel Dekker N. Y., 1973; K. Martens, "Spray Drying Handbook", 3rd Edition 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Edition, Darland Books, Caldwell N. J.; H. v. Olphen "Instruction to Clay Colloid Chemistry", 2nd Edition, J. Wiley & Sons, N. Y., Marsden "Solvents Guide", 2nd Edition, Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler "Chemische Technologie", Band 7, C. Hauser Verlag München, 4. Auflage 1986.

Spritzpulver sind in Wasser gleichmässig dispergierbare Präparate, die neben dem Wirkstoff außer einem Verdünnungs- oder Inertstoff noch Netzmittel, z. B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z. B. ligninsulfonsaures Natrium, 2,2-Dinaphthylmethan-6,6'disulfonsaures Natrium, dibutylnaphthalinsulfonsaures Natrium oder auch oleylmethyltaurinsaures Natrium enthalten können.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z. B. Blockpolymere), Alkylpolyether, Sorbitanfettsäureester, Polyoxyethylensorbitanfettsäureester oder Polyoxethylensorbitester.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaures Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser.

Anwendungsformen sind z.B. flüssige Präparate mit einem Gehalt an GA₄ und/oder GA₇ von 1 bis 500 g/l. Bevorzugt sind Konzentrationen von GA₄ und/oder GA₇ von 2 - 50 g/l, insbesondere 5 - 20 g /l.

GA₃ wird bevorzugt eingesetzt in Konzentrationen mit 1 bis 50 Gew.-% und insbesondere mit 5 bis 20 Gew.-% in fester Form (Tabletten oder Granulate), bzw. 10 bis 500 g/l und insbesondere 50 bis 200 g/l in flüssiger Form.

Die Konzentration von NAD liegt bei 1 bis 50 Gew.-%, vorzugsweise 2 bis 40 Gew.-%, insbesondere bei 5 bis 15 Gew.-% in fester Form (Pulver oder Granulate), bzw. 10 bis 500 g/l, vorzugsweise 20 bis 400 g/l, insbesondere 50 bis 150 g/l in flüssiger Form. Die Konzentration von NAD liegt bei 1 bis 50 Gew.-%, vorzugsweise 2 bis 40 Gew.-%, insbesondere bei 5 bis 15 Gew.-% in fester Form (Pulver oder Granulate), bzw. 10 bis 500 g/l, vorzugsweise 20 bis 400 g/l, insbesondere 50 bis 150 g/l, in flüssiger Form.

Die Anwendung der Stoffe führt nicht nur zu einer Ertragssteigerung, sondern gleichzeitig auch zu einer Qualitätsverbesserung der Pflanzen bzw. der Früchte. So wird beim Einsatz von Gibberellinen alleine oder in Kombination mit Auxinen neben der für konventionelle Düngemittel typischen Ertragssteigerung zusätzlich eine Verbesserung der Qualität, wie zum Beispiel eine verminderte Schorfbildung, beobachtet.

Bemerkenswert ist, dass eine signifikante Steigerung des Ertrages schon durch im Vergleich zu herkömmlichen Düngemitteln geringste Mengen der Stoffe herbeigeführt wird. Werden von den klassischen Düngern in der Regel bis zu einigen hundert Kilogramm pro Hektar und Jahr ausgebracht, so sind von den erfindungsgemäßen Stoffen nur Mengen im Bereich von einigen Gramm (ca. 5 bis 30, vorzugsweise 10 bis 15 g/ha) im Falle von Gibberellinen (z.B. GA₄/GA₇)), und etwa 70 bis 150, vorzugsweise ca. 120 g/ha im Falle von NAA und NAD, vorzugsweise NAD, erforderlich.

Durch die Anwendung der erfindungsgemäßen Dünge- bzw. Pflanzenhilfsmittel wird also das Risiko der Euthrophierung eliminiert. Da es sich um pflanzliche Produkte handelt, scheiden auch andere, umweltrelevante Beeinträchtigungen aus.

Die folgenden Anwendungsbeispiele dienen zur Beschreibung der Erfindung, ohne dass diese darauf beschränkt wäre.

### 1. Anwendung in Äpfeln

| Versuch Nr. AB9 | | |
|---|---|---|
| Anwendung | kg Äpfel/Baum | Ertrag in % der Kontrolle |
| GIBB Plus 1,2 l/ha | 36,6 | 124 |
| NAD Thin 1,5 kg/ha | 35,4 | 120 |
| Kontrolle | 29,6 | 100 |

| Versuch Nr. AN8 | | |
|---|---|---|
| Anwendung | kg Äpfel/Baum | Ertrag in % der Kontrolle |
| GIBB Plus 1,2 l/ha | 35,2 | 130,4 |
| NAD Thin 0,75 kg/ha | 30,5 | 113 |
| Kontrolle | 27,0 | 100 |

| Versuch Nr. AKJ5 | | |
|---|---|---|
| Anwendung | % Äpfel | mittleres Fruchtgewicht (g) |
| GIBB Plus 0,5 l/ha | 103 | 242 |
| NAD Thin 0,75 kg/ha | 92 | 252 |
| NAD Thin 0,75 kg/ha + GIPP Plus (4 Anwendungen ä 0,25 Inach Blühende) | 104 | 276 |
| Kontrolle | 100 | 228 |

### 2. Anwendung bei Birnen

| Versuch Nr. BC3 | | | |
|---|---|---|---|
| Anwendung | kg/Baum | Anzahl Birnen/Baum | Mittleres Fruchtgewicht (g) |
| GIBB Plus 0,6 l/ha | 3,4 | 17 | 205 |
| GIBB Plus 0,6 l/ha + GIBB 3: 3 Tabletten/ha | 5,11 | 30 | 170 |
| Kontrolle | 0,5 | 2 | 215 |
| GIBB 3: 5 Tabletten/ha | 3,91 | 21 | 184 |
| GIBB Plus 0,6 l/ha + GIBB Plus 0,6 l/ha | 7,55 | 49 | 164 |
| GIBB 3 : 5 Tabletten/ha + GIPP Plus 0,6 l/ha | 7,48 | 49 | 154 |

| Versuch Nr. BC15 | | | |
|---|---|---|---|
| Anwendung | kg/Baum | Anzahl Birnen/Baum | Mittleres Fruchtgewicht (g) |
| GIBB Plus 0,6 l/ha | 39,4 | 316 | 125 |
| Kontrolle | 28,8 | 196 | 147 |
| GIBB 3: 3 Tabletten/ha | 34,1 | 259 | 132 |
| GIBB Plus 0,6 l/ha + GIPP 3, 3 Tabletten/ha | 41,8 | 332 | 126 |

Wie ersichtlich ist, führt die Anwendung der erfindungsgemäßen Wirkstoff während der Blütezeit zu einem für Düngemittel bzw. Pflanzenhilfsmittel charakteristischen Effekt.

### Verwendete Präparate:

- GIBB Plus:: Flüssige Formulierung mit 10 g/l Gibberellin GA₄/GA₇ als Wirkstoff
- GIBB 3:: Tabletten ä 5 g mit 10 Gew.-% Gibberellin GA₃ als Wirkstoff
- NAD Thin:: Feste Formulierung mit 8,2 Gew.-% NAD (Naphtylacetamid) als Wirkstoff

## Patentansprüche

1. Verwendung einer Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), oder einer Mischung von mindestens zwei aus dieser Reihe ausgewählten Verbindungen als Dünge- und/oder Pflanzenhilfsmittel.

2. Verwendung gemäß Anspruch 1, **dadurch gekennzeichnet, dass** eine Mischung aus GA₄ und GA₇ verwendet wird.

3. Verwendung gemäß Anspruch 1, **dadurch gekennzeichnet, dass** GA₃ verwendet wird.

4. Verwendung gemäß Anspruch 1, **dadurch gekennzeichnet, dass** NAD verwendet wird.

5. Verwendung gemäß Anspruch 1, **dadurch gekennzeichnet, dass** NAA verwendet wird.

6. Verwendung gemäß einem der Ansprüche 1 bis 5, **dadurch gekennzeichnet, dass** diese im Pflanzen- bzw. Ackerbau, insbesondere im Obst- oder Weinbau, erfolgt.

7. Verwendung gemäß einem der Ansprüche 1 bis 6, **dadurch gekennzeichnet, dass** diese zur Ertragssteigerung in Kulturen während der Blüte dient.

8. Verfahren zur Düngung höherer Pflanzen und/oder zur Anwendung als Pflanzenhilfsstoff für höhere Pflanzen, **dadurch gekennzeichnet, dass** man auf deren oberirdischen Teile eine phytoeffektiv wirksame Menge mindestens einer Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), in Form einer geeigneten Formulierung aufbringt.

9. Verfahren gemäß Anspruch 8, **dadurch gekennzeichnet, dass** eine Mischung aus GA₄ und GA₇ verwendet wird.

10. Verfahren gemäß Anspruch 8, **dadurch gekennzeichnet, dass** GA₃ verwendet wird.

11. Verfahren gemäß Anspruch 8, **dadurch gekennzeichnet, dass** NAD verwendet wird.

12. Verfahren gemäß Anspruch 8, **dadurch gekennzeichnet, dass** NAA verwendet wird.

13. Verfahren gemäß einem der Ansprüche 8 bis 12, **dadurch gekennzeichnet, dass** dieses im Pflanzen- bzw. Ackerbau, insbesondere im Obst- oder Weinbau, erfolgt.

14. Verfahren gemäß einem der Ansprüche 8 bis 13, **dadurch gekennzeichnet, dass** dieses zur Ertragssteigerung in Kulturen während der Blüte dient.

15. Formulierung, enthaltend mindestens eine Verbindung, ausgewählt aus der Reihe Gibberellin A₄ (GA₄), Gibberellin A₇ (GA₇), Gibberellin A₃ (GA₃), 1-Naphthalinessigsäure (NAA) und 1-Naphthylacetamid (NAD), zusammen mit geeigneten Träger-, Zusatz- und/oder Hilfsstoffen zur Anwendung als Düngeund/oder Pflanzenhilfsmittel, wobei diese nach Verdünnung auf eine zur Aufbringung geeignete Konzentration erfolgt.

16. Formulierung gemäß Anspruch 15, enthaltend eine Mischung aus GA₄ und GA7.

17. Formulierung gemäß Anspruch 16, **dadurch gekennzeichnet, dass** diese in flüssiger Form vorliegt und einen Wirkstoffgehalt von 1 bis 500 g/l aufweist.

18. Formulierung gemäß Anspruch 15, enthaltend GA₃.

19. Formulierung gemäß Anspruch 18, **dadurch gekennzeichnet, dass** diese in Tabletten- oder Granulatform mit einem Wirkstoffgehalt von 1 bis 50 Gew.-% oder in flüssiger Form mit einem Wirkstoffgehalt von 10 bis 500 g/l vorliegt.

20. Formulierung gemäß Anspruch 15, enthaltend NAA.

21. Formulierung gemäß Anspruch 20, **dadurch gekennzeichnet, dass** diese in Pulver- oder Granulatform mit einem Wirkstoffgehalt von 1 bis 50 Gew.-%, oder in flüssiger Form mit einem Wirkstoffgehalt von 10 bis 500 g/l vorliegt.

22. Formulierung gemäß Anspruch 15, enthaltend NAD.

23. Formulierung gemäß Anspruch 22, **dadurch gekennzeichnet, dass** diese in Pulver- oder Granulatform mit einem Wirkstoffgehalt von 1 bis 50 Gew.-%, oder in flüssiger Form mit einem Wirkstoffgehalt von 10 bis 500 g/l vorliegt.

24. Formulierung gemäß einem der Ansprüche 15 bis 23, zur Anwendung im Pflanzen- bzw. Ackerbau, insbesondere im Obst- oder Weinbau.

25. Formulierung gemäß einem der Ansprüche 8 bis 13 zur Anwendung zur Ertragssteigerung in Kulturen während der Blüte.
